(19) **Europäisches Patentamt / European Patent Office / Office européen des brevets**

(11) **EP 2 869 634 A1**

(12) **EUROPEAN PATENT APPLICATION**
published in accordance with Art. 153(4) EPC

(43) Date of publication:
06.05.2015 Bulletin 2015/19

(51) Int Cl.:
*H04W 36/08* (2009.01)      *H04W 24/02* (2009.01)

(21) Application number: 13808553.5

(86) International application number:
PCT/JP2013/000230

(22) Date of filing: 18.01.2013

(87) International publication number:
WO 2014/002321 (03.01.2014 Gazette 2014/01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(72) Inventor: WATANABE, Yoshinori
Tokyo 1088001 (JP)

(74) Representative: MacDougall, Alan John Shaw et al
Mathys & Squire LLP
The Shard
32 London Bridge Street
London SE1 9SG (GB)

(30) Priority: 29.06.2012 JP 2012147290

(71) Applicant: NEC Corporation
Tokyo 108-8001 (JP)

(54) **HANDOVER OPTIMIZATION SYSTEM, HANDOVER OPTIMIZATION CONTROL DEVICE, AND HANDOVER PARAMETER ADJUSTMENT DEVICE**

(57)     An adjustment unit (122) operates so as to adjust a handover parameter applied to a first cell (131), in accordance with an optimization target defined using at least one of a plurality of performance indicators regarding outgoing handover of a mobile terminal (101) from the first cell (131). A control unit (121) changes the optimization target for adjusting the handover parameter, according to a measurement value of the at least one of the plurality of performance indicators relating to the first cell (131). As a result, handover optimization for a plurality of cells, having different handover-performance-indicator sensitivity with respect to change of an HO parameter, can be performed effectively and generically.

Fig. 1

**Description**

**Technical Field**

The present application relates to optimization of handover parameters.

**Background Art**

In a radio communication system, in moving from a serving cell (source cell) to another cell, a mobile terminal performs switching processing of the serving cell called handover, and continues communication. In order to achieve handover of a mobile terminal, a base station that manages the source cell instructs the mobile terminal to transmit a measurement report when a predetermined event occurs. The predetermined event is, for example, deterioration of radio quality of the source cell. The measurement report generated by the mobile terminal includes measurement results of radio quality of the source cell and its neighboring cells. In response to receiving the measurement report from the mobile terminal, the base station of the source cell determines a cell (target cell) to which a radio link connection switches based on the measurement report, and initiates a handover procedure including signaling with the mobile terminal and the target cell.

Here, introduced is one of transmission events of the measurement report defined by 3GPP TS 36.331 V9.3.0 (2010-06), which is a technical specification regarding LTE (Long Term Evolution)/E-UTRAN (Evolved UTRAN). An essential portion of a reporting event defined as Event A3 (Neighbor becomes offset better than serving) in the above-described literature is expressed by the following Expression (1).

$$P_S + O_S < P_T + O_T \quad (1)$$

$P_S$ in Expression (1) is a measurement result of radio quality of a source cell, and $P_T$ therein is a measurement result of radio quality of a neighboring cell. In a case of LTE, $P_S$ and $P_T$ are downlink RSRP (Reference Signal Received Power) or RSRQ (Reference Signal Received Quality). The RSRQ is a ratio of the RSRP to total received power (RSSI: Received Signal Strength Indicator).

$O_S$ in Expression (1) is an offset value that acts on radio quality of a downlink reference signal of the source cell, and is an HO parameter generally called an a 3-offset (or hysteresis). Meanwhile, $O_T$ in Expression (1) is an offset value that acts on radio quality of a downlink reference signal of the neighboring cell, and is an HO parameter generally called a CIO (Cell Individual Offset). A value of the CIO (i.e., $O_T$) may be set to be different for each neighboring cell. The CIO is included in a neighbor list (also called a neighboring cell list) of which the base station notifies mobile terminals connected to a cell managed by the base station itself.

When an operating condition of Expression (1) is set to the base station, the base station informs a mobile terminal, connected to the cell managed by the base station, about the operating condition of Expression (1). When a period in which the condition of Expression (1) is satisfied continues exceeding a predetermined period defined as a guard time (TTT: Time to Trigger), the mobile terminal transmits a measurement report to the base station that manages the source cell. If receiving the measurement report from the mobile terminal, the base station determines a target cell based on the measurement report, and initiates handover to the target cell.

However, when the initiation of the handover is too late or too early, a connection failure involving abnormal disconnection of a radio link (hereinafter referred to as RLF (Radio Link Failure)) occurs. In the present description, the connection failure involving RLF caused by inappropriate handover is called handover failure. The handover failure may be classified into Too Late Handover, Too Early Handover, and Handover to Wrong Cell. Too Late Handover corresponds to a situation where a mobile terminal that has experienced RLF in a source cell during execution of a handover procedure tries connection re-establishment (including re-establishment of a radio link) to a target cell, or a situation where a mobile terminal that has experienced RLF in a source cell before initiation of handover tries connection re-establishment to a cell different from the source cell. Too Early Handover corresponds to a situation where a mobile terminal that has experienced RLF in a target cell during execution of a handover procedure or immediately after completion of handover tries connection re-establishment to a source cell. Handover to Wrong Cell corresponds to a situation where a mobile terminal that has experienced RLF in a source cell or a target cell during execution of a handover procedure or immediately after completion of handover tries connection re-establishment to a cell different from both the source cell and the target cell. Handover optimization or MRO (Mobility Robustness Optimization) is a technology of reducing handover failure by detecting the above-described handover failures and adjusting HO parameters is, and is one of major use cases of an SON (Self-Organizing Network).

It is to be noted that "reducing handover failure" is merely one of major targets of handover optimization. For example, "reducing ping-pong handover" is also one of the major targets of the handover optimization. The ping-pong handover means a phenomenon in which a mobile terminal that has performed handover from a cell A to a cell B again performs handover to the original cell A for a short time (e.g., within several seconds). The ping-pong HO may include a case where the mobile terminal further passes through another cell before returning to the cell A (e.g., the cell A -> the cell B -> a cell C -> the cell A). Since the ping-pong handover increases handover processing loads of base stations and a network, it is desirable that the ping-pong handover can be reduced by adjustment of HO parameters.

Namely, the handover optimization should take into consideration a plurality of handover performance indicators (HPIs). Specific examples of the plurality of HPIs include a handover failure rate and a ping-pong handover rate. Non-Patent Literature1 discloses an optimization technique in which an objective function is defined by a linear weighted sum of a plurality of HPIs in order to simultaneously take into consideration a plurality of HPIs, and in which HO parameters (e.g., an A3-offset (hysteresis) and a TTT) are updated so as to minimize the objective function.

### Citation List

### Non Patent Literature

[Non-Patent Literature 1] Thomas Jansen et al., "Weighted performance based handover parameter optimization in LTE," IEEE VTC2011-spring, IWSON, May 15, 2011

### Summary of Invention

### Technical Problem

The technique disclosed in Non-Patent Literature 1 uses a minimization of a weighted sum in order to optimize a plurality of HPIs (e.g., a handover failure rate and a ping-pong handover rate) that have a relation where if one is improved, the other will be deteriorated. For example, when a handover failure rate (R_HOF) and a ping-pong handover rate (R_PPHO) are taken into consideration, an objective function (it is called HP (HO performance) in Non-Patent Literature 1) can be expressed by the following Expression (2).

$$HP = w1 \cdot R\_HOF + w2 \cdot R\_PPHO \quad (2)$$

Here, w1 is a weight to the handover failure rate (R_HOF), and w2 is a weight to the ping-pong handover rate (R_PPHO). The weights w1 and w2 are determined based on an operator policy.

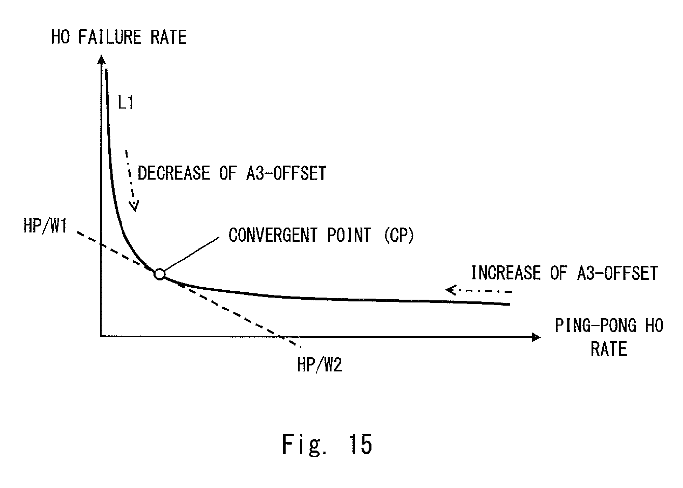

A curved line L1 shown in Fig. 15 represents a specific example of sensitivity (i.e., parameter sensitivity) of the handover failure rate (R_HOF) and the ping-pong handover rate (R_PPHO) with respect to change of an HO parameter. A horizontal axis of a graph of Fig. 15 shows the ping-pong handover rate, and a vertical axis shows the handover failure rate. For example, as an A3-offset becomes smaller, the handover failure rate gradually decreases, and on the contrary, the ping-pong handover rate gradually increases. When optimization to minimize the objective function of the above-mentioned Expression (2) is performed to a cell having parameter sensitivity shown in Fig. 15, a tangent point of a dashed line shown in Fig. 15 with the curved line L1 is obtained as an optimum solution. Accordingly, when updating of the HO parameter using the HP of Expression (2) as an objective function is repeated, the handover failure rate (R_HOF) and the ping-pong handover rate (R_PPHO) can be expected to eventually converge on a convergent point CP shown by a round mark in Fig. 15.

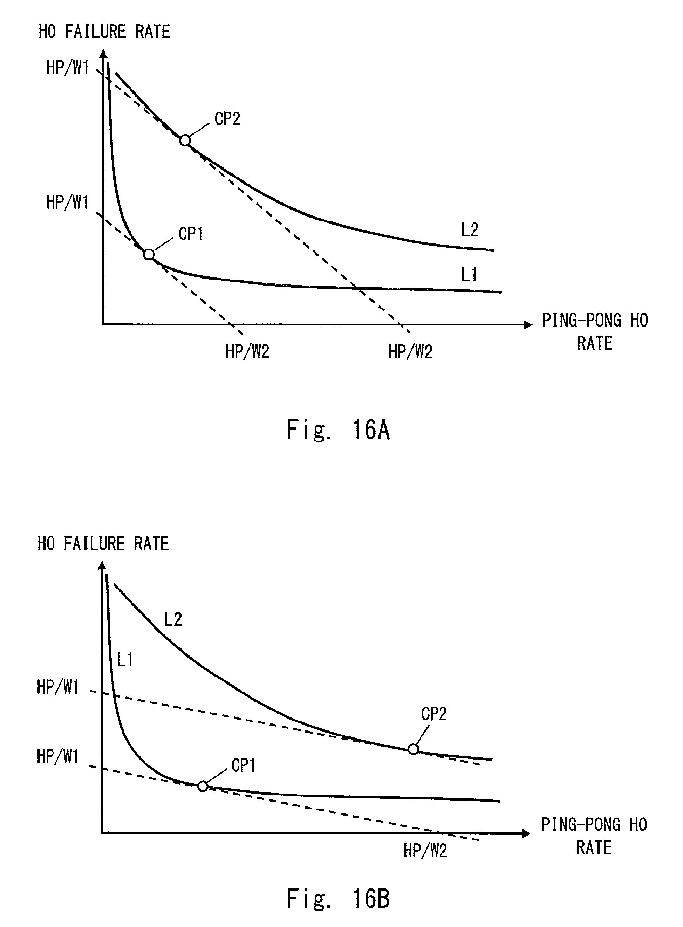

However, an environment can be considered where there is a plurality of cells having different parameter sensitivity of HPIs (e.g., the handover failure rate and the ping-pong handover rate). In such environment, when a common objective function (e.g., Expression (2)) based on a weighted sum is applied to the plurality of cells, there occur a cell in which the ping-pong handover rate significantly increases, or a cell in which the handover failure rate cannot be sufficiently decreased. For example, an example of Fig. 16A shows a case where the weight w1 to the handover failure rate is small, and the weight w2 to the ping-pong handover rate is large, i.e., a case where w2/w1 is large. Meanwhile, an example of Fig. 16B shows a case where the weight w1 to the handover failure rate is large, and the weight w2 to the ping-pong handover rate is small, i.e., a case where w2/w1 is smaller compared with the case of Fig. 16A. In the example of Fig. 16A, although an almost appropriate convergent point CP1 can be obtained in a cell having parameter sensitivity shown by the curved line L1, the handover failure rate cannot be sufficiently decreased at a convergent point CP2 of a cell having parameter sensitivity shown by a curved line L2. In addition, in the example of Fig. 16B, the ping-pong handover rate cannot be sufficiently decreased at the convergent point CP2 of a cell having parameter sensitivity shown by the curved line L2.

In order to address problems shown in Figs. 16A and 16B, it is considered that a network operator, for example, adjusts the weights w1 and w2 for each cell, in other words, sets a different objective function (or optimization target) for each cell. However, this increases a burden of the network operator. All the more so if HPIs that should be taken into consideration increase.

Accordingly, one of objectives of the present invention is to provide a versatile handover optimization system, a handover optimization control device, a handover parameter adjustment device, and a method and a program regarding these that can effectively perform handover optimization for a plurality of cells having different sensitivity of HPIs (e.g., a handover failure rate and a ping-pong handover rate) with respect to change of an HO parameter.

**Solution to Problem**

In a first aspect, a handover optimization system includes an adjustment unit and a control unit. The adjustment unit operates so as to adjust a handover parameter applied to a first cell, in accordance with an optimization target defined using at least one of a plurality of performance indicators regarding outgoing handover of a mobile terminal from the first cell. The control unit operates so as to change the optimization target according to a measurement value of the at least one of the plurality of performance indicators.

In a second aspect, a handover optimization control device includes a control unit. The control unit operates so as to change an optimization target applied to handover optimization processing of a first cell, according to a measurement value of at least one of a plurality of performance indicators regarding outgoing handover of a mobile terminal from the first cell.

In a third aspect, a handover parameter adjustment device includes an adjustment unit. The adjustment unit operates so as to adjust a handover parameter applied to a first cell, in accordance with an adjustment algorithm that is changed according to a measurement value of at least one of a plurality of performance indicators regarding outgoing handover of a mobile terminal from the first cell.

In a fourth aspect, a base station includes the handover parameter adjustment device according to the third aspect described above.

In a fifth aspect, a method for controlling handover optimization includes changing an optimization target applied to handover optimization processing of a first cell, according to a measurement value of at least one of a plurality of performance indicators regarding outgoing handover of a mobile terminal from the first cell.

In a sixth aspect, a handover parameter adjustment method includes adjusting a handover parameter applied to a first cell, in accordance with an adjustment algorithm that is changed according to a measurement value of at least one of a plurality of performance indicators regarding outgoing handover of a mobile terminal from the first cell.

In a seventh aspect, a program includes instructions to cause a computer to perform a method for handover optimization control. The method includes changing an optimization target applied to handover optimization processing of a first cell, according to a measurement value of at least one of a plurality of performance indicators regarding outgoing handover of a mobile terminal from the first cell.

In an eighth aspect, a program includes instructions to cause a computer to perform a method for handover parameter adjustment. The method includes adjusting a handover parameter applied to a first cell, in accordance with an adjustment algorithm that is changed according to a measurement value of at least one of a plurality of performance indicators regarding outgoing handover of a mobile terminal from the first cell.

**Advantageous Effects of Invention**

According to the above-mentioned aspects, can be provided a versatile handover optimization system, a handover optimization control device, a handover parameter adjustment device, and a method and a program regarding these that can effectively perform handover optimization for a plurality of cells having different sensitivity of HPIs (e.g., a handover failure rate and a ping-pong handover rate) with respect to change of an HO parameter.

**Brief Description of Drawings**

Fig. 1 is a block diagram showing a configuration example of a radio communication system according to first to fifth embodiments.

Fig. 2 is a flow chart showing an example of a procedure for determining an optimization target according to the first embodiment.

Fig. 3 is a flow chart showing an example of a procedure for adjusting an HO parameter according to the first embodiment.

Fig. 4 is a graph showing an example of region division according to measurement values of a handover failure rate and a ping-pong handover rate.

Fig. 5 is a table showing examples of a plurality of optimization targets according to the measurement values of the handover failure rate and the ping-pong handover rate.

Fig. 6 is a graph showing an example of a relation between parameter sensitivity of the handover failure rate and the ping-pong handover rate, and a convergent point by optimization.

Fig. 7 is a graph showing an example of region division according to measurement values of a handover failure rate and a ping-pong handover rate in the second embodiment.

Fig. 8 is a flow chart showing an example of a procedure for determining an optimization target in the second embodiment.

Fig. 9 is a flow chart showing an example of a procedure for adjusting an HO parameter in the second embodiment.

Fig. 10 is a graph showing an example of region division according to measurement values of a handover failure rate and a ping-pong handover rate in the third embodiment.

Fig. 11 is a flow chart showing an example of a procedure for determining an optimization target in the third embodiment.

Fig. 12 is a flow chart showing an example of a procedure for determining an optimization target in the fourth embodiment.

Fig. 13 is a graph showing an example of region division according to measurement values of a handover failure rate and a ping-pong handover rate in the fifth embodiment.

Fig. 14 is a flow chart showing an example of a procedure for determining an optimization target in the fifth embodiment.

Fig. 15 is a graph for illustrating a relation between a convergent point (an optimum solution) by optimization and parameter sensitivity of the handover failure rate and the ping-pong handover rate.

Fig. 16A is a graph for illustrating a relation between a convergent point (an optimum solution) by optimization and sensitivity of the handover failure rate and the ping-pong handover rate with respect to change of an HO parameter.

Fig. 16B is a graph for illustrating a relation between a convergent point (an optimum solution) by the optimization and sensitivity of the handover failure rate and the ping-pong handover rate with respect to the change of the HO parameter.

## Description of Embodiments

Hereinafter, specific embodiments will be explained in detail with reference to drawings. Throughout the drawings, the identical and corresponding components are denoted by the same reference symbols, and overlapping explanation is omitted as needed for clarity of explanation.

First embodiment

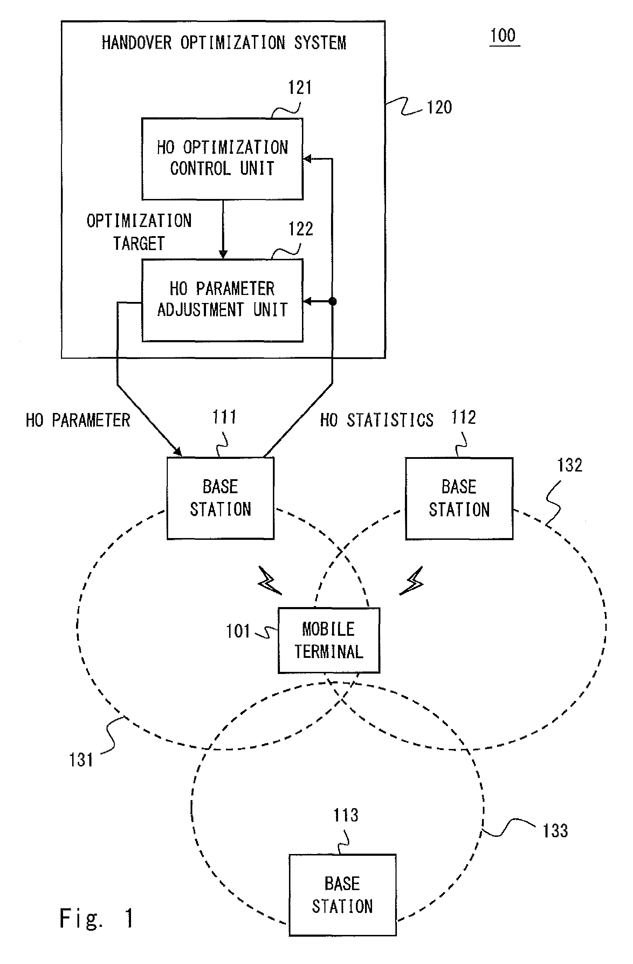

Fig. 1 is a block diagram showing a configuration example of a radio communication system 100 according to some embodiments including the present embodiment. The radio communication system 100 includes a plurality of base stations 111 to 113. The base stations 111 to 113 manage cells 131 to 133, respectively, and communicate with one or more mobile terminals (e.g., a mobile terminal 101). The mobile terminal 101 can be connected to any one of the base stations 111 to 113. It is to be noted that the configuration example of Fig. 1 may be appropriately changed since it is merely one example for explanation. For example, the radio communication system 100 may include four or more base stations. In addition, neighborhood relations of the cells 131 to 133 shown in Fig. 1 are also merely one example. For example, the radio communication system 100 may have a hierarchical cell structure in which a certain cell (e.g., the cell 132) is arranged within another cell (e.g., the cell 133).

In addition, the radio communication system 100 includes a handover optimization system 120. The handover optimization system 120 receives handover statistics regarding the cell 131 from the base station 111, and acquires a measurement value of a handover performance indicator regarding the cell 131 based on the handover statistics. The handover optimization system 120 then adjusts an HO parameter applied to the cell 131 based on the measurement value of the handover performance indicator. Here, the handover statistics are statistical information that indicates actual results (measurement values) of outgoing handover from the cell 131. The handover statistics include, for example, the number of handover attempts, the number of handover successes, the number of handover failures, and the number of ping-pong handovers. The number of handover failures may be reported by being divided into the number of Too Late Handovers, the number of Too Early Handovers, and the number of Handovers to Wrong Cells. The handover statistics may include not the number but ratios, for example, a handover failure rate (e.g. a Too Late Handover rate, a Too Early Handover rate, and a Handover to Wrong Cell rate), and a ping-pong handover rate. The handover failure rate may be a value obtained by dividing the number of handover failures within a predetermined period by the number of handover attempts. The ping-pong handover rate may be a value obtained by dividing the number of ping-pong handovers within a predetermined period by the number of handover successes.

Since detection techniques of the handover failure and the ping-pong handover by the base station 111 has already been known well, detailed explanation regarding these is omitted in the present description. For example, the base station 111 can detect handover failure including Too Late Handover, Too Early Handover, and Handover to Wrong Cell by receiving an RLF INDICATION message and a HANDOVER REPORT message, which are defined by 3GPP TS 36.423 V9.5.0, from the neighboring cells 132 and 133. In addition, the base station 111, for example, refers to UE HISTORY INFORMATION included in a HANDOVER REQUEST message defined by 3GPP TS 36.423 V9.5.0, acquires a history of cells in which the mobile terminal 101 located, and thereby can detect the ping-pong handover.

Hereinafter, techniques for determining a handover optimization target and for adjusting an HO parameter performed by the handover optimization system 120 are explained in detail. The handover optimization system 120 includes a handover (HO) optimization control unit 121 and an HO parameter adjustment unit 122. The HO optimization control unit 121 changes an optimization target according to measurement values of one or more HPIs regarding the cell 131. Each HPI regarding the cell 131 is a performance indicator regarding the outgoing handover of the mobile terminal 101 from the cell 131. Specific examples of the HPIs regarding the cell 131 include the number of handover failures (or the handover failure rate) and the number of ping-pong handovers (or the ping-pong handover rate).

The optimization target (or an optimization objective) means an objective of optimization by adjusting a HO parameter. The optimization target is defined using one or more HPIs regarding the cell 131. The optimization target is, for example, "reducing the handover failure rate" or "reducing of the ping-pong handover rate", etc. The optimization target may be called an optimization strategy or an optimization policy. In addition, the optimization target may be defined as an objective function, or the objective function and a constraint (in a case of constrained optimization). In this case, change of the optimization target may be made by changing the objective function, the constraint, or both of them. For example, the optimization target may be defined using an objective function as a weighted sum of a plurality of HPIs shown in Expression (2). Namely, the optimization target may be "minimizing the objective function of Expression (2)".

Furthermore, the optimization target is associated with an adjustment algorithm for adjusting an HO parameter. Consequently, change of the optimization target leads to change of the adjustment algorithm for adjusting the HO parameter. Accordingly, it can also be said that the adjustment algorithm for adjusting the HO parameter is determined according to the measurement values of one or more HPIs regarding the cell 131. The adjustment algorithm for adjusting the HO parameter is defined using, for example, (a) an HPI used for evaluation of an optimization state, (b) a threshold value to the HPI, (c) a determination condition to the HPI, (d) an adjustment direction of the HO parameter, and is implemented in the HO parameter adjustment unit 122 hereinafter described.

The HO parameter adjustment unit 122 adjusts an HO parameter applied to the cell 131 in accordance with an optimization target determined (changed) by the HO optimization control unit 121. Specifically, the HO parameter adjustment unit 122 adjusts the HO parameter using an adjustment algorithm being associated with the optimization target determined by the HO optimization control unit 121. Accordingly, it can also be said that the HO parameter adjustment unit 122 adjusts the HO parameter using the adjustment algorithm that is determined according to the measurement values of one or more HPIs regarding the cell 131. The HO parameter to be adjusted by the HO parameter adjustment unit 122 includes, for example, at least one of an A3-offset (hysteresis) that acts on radio quality of the cell 131, a CIO that is determined for each cell pair of the cell 131 and a neighboring cell (e.g., the cell 132) and acts on radio quality of the neighboring cell (e.g., the cell 132), and a TTT. The HO parameter adjusted by the HO parameter adjustment unit 122 is provided to the base station 111, and is applied for handover of the mobile terminal 101 in the cell 131.

The HO optimization control unit 121 and the HO parameter adjustment unit 122 that are shown in Fig. 1 may be arranged in a network management system. The network management system may be called an OAM (Operation Administration and Maintenance) server, an OMC (Operation and Maintenance Centre), an NM (Network Manager), or an EM (Element Manager) in some cases. Alternatively, the HO optimization control unit 121 and HO parameter adjustment unit 122 may be arranged integrally with the base station 111. Also, alternatively, the HO parameter adjustment unit 122 may be arranged in a device separated from the HO optimization control unit 121. For example, the HO optimization control unit 121 may be arranged in the network management system, and the HO parameter adjustment unit 122 may be arranged in the base station 111.

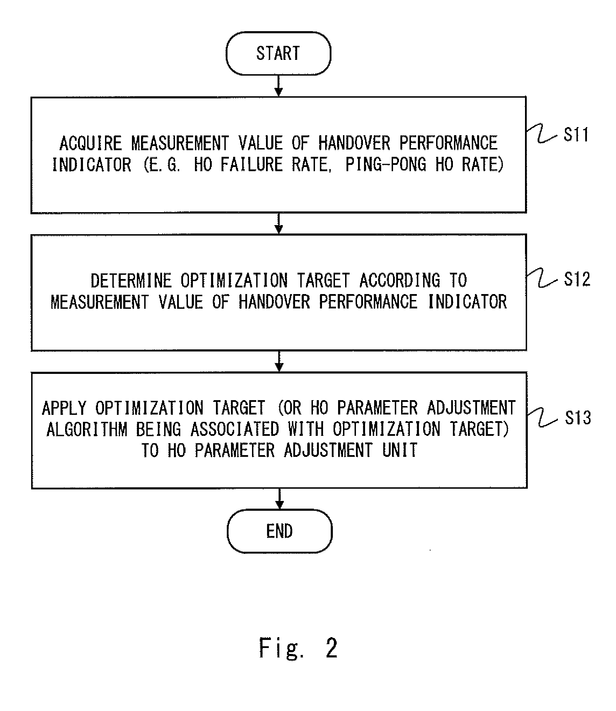

Fig. 2 is a flow chart showing an example of a procedure for determining an optimization target by the HO optimization control unit 121. In step S11, the HO optimization control unit 121 acquires a measurement value of an HPI regarding the cell 131. In step S12, the HO optimization control unit 121 determines an optimization target of the cell 131 according to the measurement value of the HPI regarding the cell 131. In step S13, the HO optimization control unit 121 applies the determined optimization target (or an HO parameter adjustment algorithm associated with the optimization target) to the HO parameter adjustment unit 122.

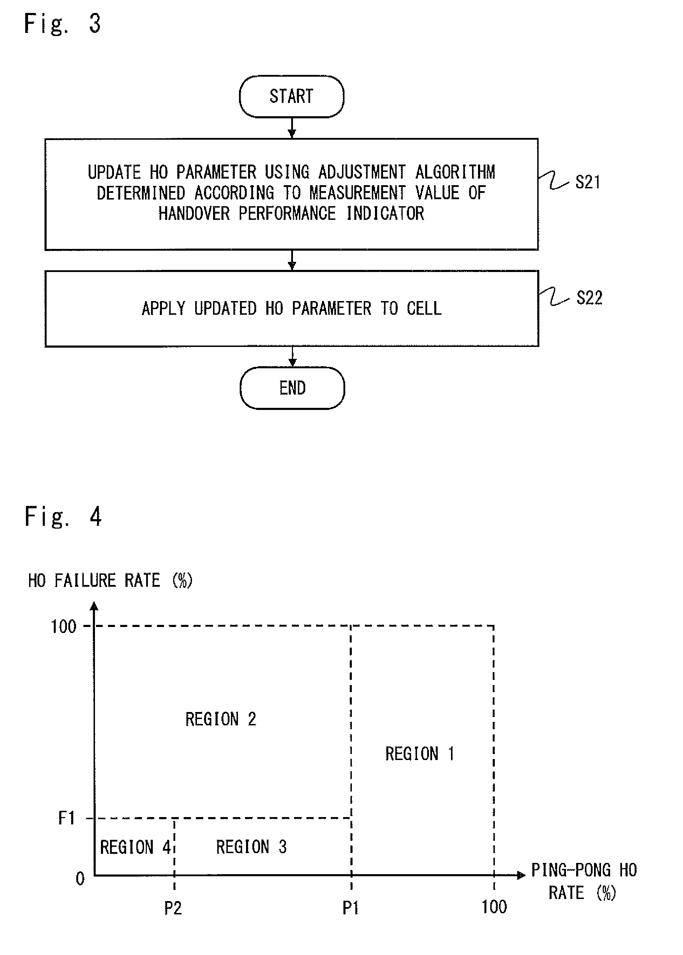

Fig. 3 is a flow chart showing an example of a procedure for adjusting an HO parameter by the HO parameter adjustment unit 122. In step S21, the HO parameter adjustment unit 122 updates an HO parameter regarding the cell 131 using the adjustment algorithm determined according to the measurement value of the HPI regarding the cell 131. In step S22, the HO parameter adjustment unit 122 provides the updated HO parameter to the base station 111. Consequently, the updated HO parameter is utilized for handover of the mobile terminal 101 in the cell 131.

Subsequently, a specific example of changing an optimization target according to a measurement value of an HPI is explained. For example, a handover failure rate and a ping-pong handover rate may be used as the HPIs, and an optimization target according to the measurement values of these two HPIs may be determined. Fig. 4 is a graph for visualizing and illustrating an optimization target according to measurement values of a handover failure rate and a ping-pong handover rate. In an example of Fig. 4, a plane defined by a handover failure rate (0 to 100%) and a ping-pong handover rate (0 to 100%) is divided into four regions. A threshold value F1 shown in Fig. 4 is applied to the handover failure rate. Threshold values P1 and P2 shown in Fig. 4 are applied to the ping-pong handover rates.

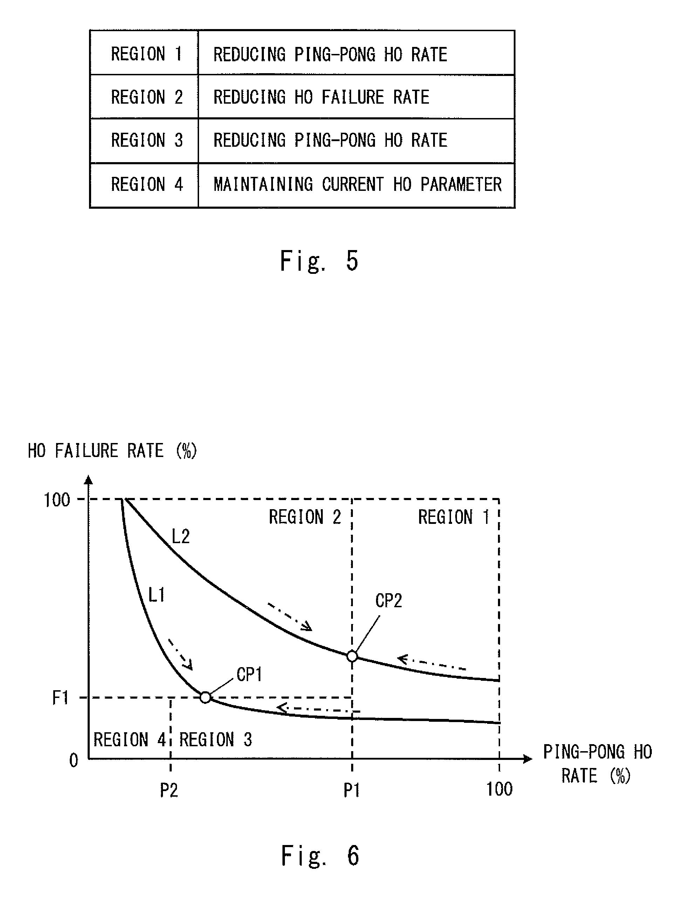

A table of Fig. 5 shows specific examples of optimization targets determined to each of the regions 1 to 4 shown in Fig. 4. Namely, in the examples shown in Fig. 5, when the measurement value of the ping-pong handover rate of a cell (e.g. the cell 131) exceeds the threshold value P1 (i.e. the region 1), the HO optimization control unit 121 determines "reducing the ping-pong handover rate" as the optimization target of the cell. Meanwhile, when the measurement value of the ping-pong handover rate of the cell is less than the threshold value P1 (i.e. the region 2), the HO optimization control unit 121 determines "reducing the handover failure rate" as the optimization target of the cell. Furthermore, the HO optimization control unit 121 changes the optimization target according to whether or not the measurement value of the handover failure rate of the cell exceeds the threshold value F1. That is, when the measurement value of the ping-pong handover rate of the cell is less than the threshold value P1, and the measurement value of the handover failure rate of the cell is less than the threshold value F1 (i.e. the region 3), the HO optimization control unit 121 determines "reducing the ping-pong handover rate" as the optimization target of the cell. Still furthermore, the HO optimization control unit 121 changes the optimization target according to whether or not the measurement value of the ping-pong handover rate exceeds the threshold value P2 that is smaller than P1. Specifically, when the measurement value of the ping-pong handover rate of the cell is less than the threshold value P2 that is smaller than P1, and the measurement value of the handover failure rate of the cell is less than the threshold value F1 (i.e. the region 4), the HO optimization control unit 121 determines "maintaining a current HO parameter" as the optimization target of the cell.

As in the examples explained using Figs. 4 and 5, due to changing the optimization target according to the measurement values of the handover failure rate and the ping-pong handover rate, handover optimization for a plurality of cells having different parameter sensitivity can be effectively performed. Fig. 6 shows an example of performing handover optimization for two cells having different parameter sensitivity in accordance with the examples of changing the optimization target explained using Figs. 4 and 5. As for a cell having parameter sensitivity shown by a curved line L1 of Fig. 6, the handover failure rate and the ping-pong handover rate can be converged on a boundary of the regions 2 and 3 (a convergent point CP1). Meanwhile, as for a cell having parameter sensitivity shown by a curved line L2, the handover failure rate and the ping-pong handover rate can be converged on a boundary of the regions 1 and 2 (a convergent point CP2).

As already mentioned, in an environment where there is the plurality of cells having different sensitivity of HPIs (e.g., the handover failure rate and the ping-pong handover rate) with respect to the change of the HO parameter, when a common objective function (e.g., Expression (2)) based on a weighted sum is applied to the plurality of cells, there is a possibility that handover optimization cannot be appropriately performed. In contrast with this, a handover optimization technique mentioned in the present embodiment changes an optimization target (and an HO parameter adjustment algorithm corresponding thereto) regarding handover optimization for each cell according to measurement values of one or more HPIs regarding the each cell. Accordingly, the technique of the present embodiment can effectively and versatilely perform handover optimization for a plurality of cells having different parameter sensitivity as has been explained in the specific examples of Figs. 4 to 6.

It is to be noted that change of the optimization target explained using Figs. 4 to 6 is merely one example. Other examples of the change of the optimization target will be described in second to fifth embodiments.


Second embodiment

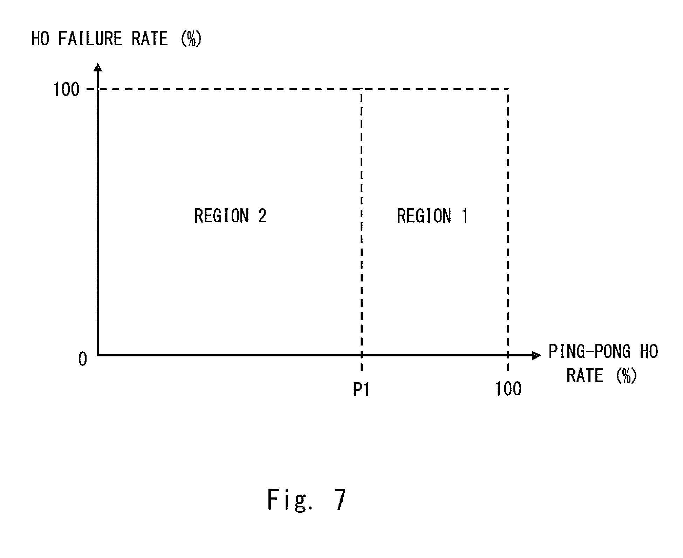

The present embodiment describes a specific example of changing a handover optimization target according to a measurement value of an HPI. A configuration example of the radio communication system 100 according to the present embodiment is the same as Fig. 1. Fig. 7 is a graph for visualizing and illustrating an optimization target according to measurement values of a handover failure rate and a ping-pong handover rate. In an example of Fig. 7, a plane defined by a handover failure rate (0 to 100%) and a ping-pong handover rate (0 to 100%) is divided into two regions (the regions 1 and 2). The threshold value P1 shown in Fig. 7 is applied to the ping-pong handover rate.

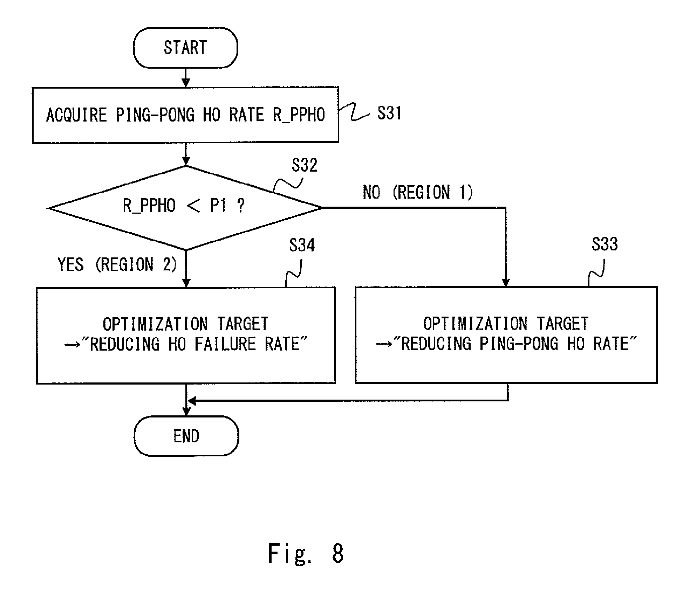

Fig. 8 is a flow chart showing an example of a procedure for determining an optimization target by the HO optimization control unit 121 according to the present embodiment. In step S31, the HO optimization control unit 121 acquires a measurement value of a ping-pong handover rate regarding the cell 131. The measurement value of the ping-pong handover rate may be calculated by the handover optimization system 120 using handover statistics received from the base station 111. Alternatively, the measurement value of the ping-pong handover rate may be calculated by the base station 111, and may be included in the handover statistics. In step S32, the HO optimization control unit 121 compares a measurement value (R_PPH) of the ping-pong handover rate with the threshold value P1. If the R_PPH is not less than the P1 (NO in step S32), i.e., if the R_PPH belongs to the region 1 of Fig. 7, the HO optimization control unit 121 determines "reducing the ping-pong handover rate" as the optimization target (step S33). In contrast with this, if the R_PPH is less than the P1 (YES in step S32), i.e., if the R_PPH belongs to the region 2 of Fig. 7, the HO optimization control unit 121 determines "reducing the handover failure rate" as the optimization target (step S34).

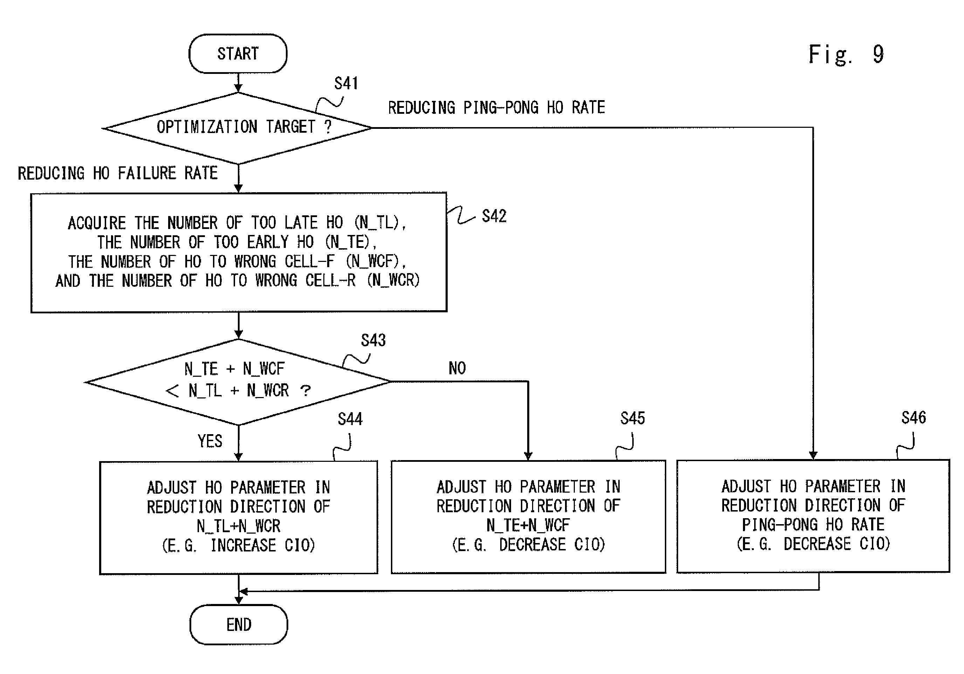

Fig. 9 is a flow chart showing an example of a procedure for adjusting an HO parameter by the HO parameter adjustment unit 122 according to the present embodiment. In step S41, the HO parameter adjustment unit 122 confirms an optimization target determined by the HO optimization control unit 121. The HO parameter adjustment unit 122 changes an adjustment algorithm for an HO parameter according to the optimization target. Namely, when the optimization target is "reducing the handover failure rate" (i.e., the region 2 of Fig. 7), the HO parameter adjustment unit 122 executes adjustment algorithms shown in steps S42 to S45. In contrast with this, when the optimization target is "reducing the ping-pong handover rate" (i.e., the region 1 of Fig. 7), the HO parameter adjustment unit 122 executes an adjustment algorithm shown in step S46.

The adjustment algorithms shown in steps S42 to S45 are as follows. In step S42, the HO parameter adjustment unit 122 calculates the following four indicators regarding a cell pair of the cell 131 and a neighboring cell (e.g., the cell 132) based on handover statistics:

- the number of Too Late Handovers (N_TL) from the cell 131 to the cell 132;
- the number of Too Early Handovers (N_TE) from the cell 131 to the cell 132;
- the number of Handovers to Wrong Cells-F (N_WCF) in which the cell 132 is regarded as an inappropriate target cell; and
- the number of times of Handovers to Wrong Cells-R (N_WCR) in which the cell 132 is a re-connection cell (i.e. a true target cell).

If (N_TL+N_WCR) is larger than (N_TE+N_WCF) (YES in step S43), HO parameter adjustment to reduce Too Late Handover and Handover to Wrong Cell-R to the cell 132 is performed (step S44). In contrast with this, if the (N_TE+N_WCF) is not less than the (N_TL+N_WCR) (NO in step S43), HO parameter adjustment to reduce Too Early Handover and Handover to Wrong Cell-F to the cell 132 is performed (step S45). In the adjustment of the HO parameter in step S45, a CIO that acts on radio quality of the cell 132 may be decreased by a predetermined step size. In addition or alternatively, a TTT applied to the cell 131 may be increased by a predetermined step size. In addition or alternatively, an A3-offset that acts on the radio quality of the cell 131 may be increased by a predetermined step size. It is to be noted that in step S44, adjustment to increase or decrease the HO parameter in an opposite direction of step S45.

Meanwhile, the adjustment algorithm shown in step S46 is as follows. In step S46, the HO parameter is adjusted in an adjustment direction where the ping-pong handover rate is reduced. Adjustment of the HO parameter in step S46 may be performed similarly to step S45. Namely, in step S46, the CIO that acts on the radio quality of the cell 132 may be decreased by a predetermined step size, the TTT applied to the cell 131 may be increased by a predetermined step size, or the A3-offset that acts on the radio quality of the cell 131 may be increased by a predetermined step size. Accordingly, step S46 may be the same processing as step S45.

A handover optimization technique mentioned in the present embodiment changes the optimization target of handover according to whether or not the ping-pong handover rate exceeds the threshold value P1. In addition, the adjustment algorithm for the HO parameter is changed according to the change of the optimization target. Specifically, when the measurement value of the ping-pong handover rate of the cell 131 exceeds the threshold value P1 (i.e. the region 1 of Fig. 7), the HO optimization control unit 121 determines "reducing the ping-pong handover rate" as the optimization target of the cell 131. Meanwhile, when the measurement value of the ping-pong handover rate of the cell 131 is less than the threshold value P1 (i.e. the region 2 of Fig. 7), the HO optimization control unit 121 determines "reducing the handover failure rate" as the optimization target of the cell 131. Consequently, the HO parameter adjustment unit 122 can adjust the HO parameter so as to reduce a second performance indicator (e.g., the handover failure rate or the number of handover failures) regarding handover failure while suppressing a first performance indicator (e.g., the ping-pong handover rate or the number of ping-pong handovers) regarding a handover processing load of the cell 131 to substantially not more than the threshold value P1. Accordingly, due to the handover optimization technique mentioned in the present embodiment, the first performance indicator (e.g., the ping-pong handover rate or the number of ping-pong handovers) regarding the handover processing load of the cell 131 can converge near the threshold value P1, regardless of a parameter sensitivity characteristic of the cell 131.

Third embodiment

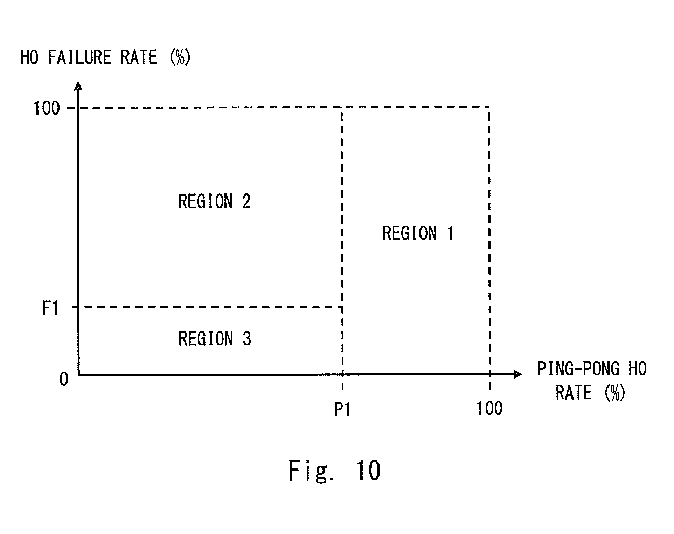

The present embodiment describes another specific example of changing the handover optimization target according to the measurement value of the HPI. A configuration example of the radio communication system 100 according to the present embodiment is to the same as Fig. 1. Fig. 10 is a graph for visualizing and illustrating an optimization target according to measurement values of a handover failure rate and a ping-pong handover rate. In an example of Fig. 10, a plane defined by a handover failure rate (0 to 100%) and a ping-pong handover rate (0 to 100%) is divided into three regions. The threshold value P1 shown in Fig. 10 is applied to the ping-pong handover rate, and the threshold value F1 is applied to the handover failure rate. Namely, in Fig. 10, the region 2 of Fig. 7 is further divided into two regions (the regions 2 and 3 of Fig. 10)

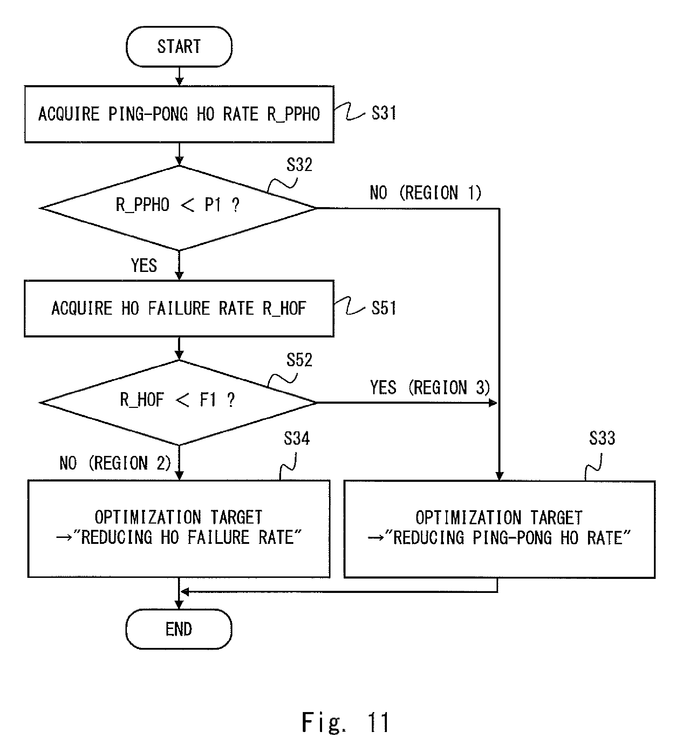

Fig. 11 is a flow chart showing an example of a procedure for determining an optimization target by the HO optimization control unit 121 according to the present embodiment. Processing in steps S31 to S34 shown in Fig. 11 may be the same as processing in steps S31 to S34 of the same symbols shown in Fig. 8. In step S51 of Fig. 11, the HO optimization control unit 121 acquires a measurement value of a handover failure rate regarding the cell 131. The measurement value of the handover failure rate may be calculated by the handover optimization system 120 using handover statistics received from the base station 111. Alternatively, the measurement value of the handover failure rate may be calculated by the base station 111, and may be included in the handover statistics. In step S52, the HO optimization control unit 121 compares a measurement value (R_HOF) of the handover failure rate with the threshold value F1. If the R_HOF is not less than the F1 (NO in step S52), i.e., if the R_HOF belongs to the region 2 of Fig. 10, the HO optimization control unit 121 determines "reducing the handover failure rate" as the optimization target (step S34). In contrast with this, if the R_HOF is less than the F1 (YES in step S52), i.e., if the R_HOF belongs to the region 3 of Fig. 11, the HO optimization control unit 121 determines "reducing the ping-pong handover rate" as the optimization target (step S33).

An HO parameter adjustment procedure performed by the HO parameter adjustment unit 122 of the present embodiment may be the same as the adjustment procedure of the second embodiment shown in Fig. 9.

A handover optimization technique mentioned in the present embodiment changes the optimization target of handover according to whether or not the ping-pong handover rate exceeds the threshold value P1 similarly to the second embodiment. Furthermore, the handover optimization technique mentioned in the present embodiment changes the optimization target of the handover according to whether or not the handover failure rate exceeds the threshold value F1. In addition, an adjustment algorithm for an HO parameter is changed according to these changes of the optimization target. Specifically, when a measurement value of a ping-pong handover rate of the cell 131 is less than the threshold value P1, and a measurement value of a handover failure rate of the cell 131 is less than the threshold value F1 (i.e. the region 3 of Fig. 10), the HO optimization control unit 121 determines "reducing the ping-pong handover rate" as an optimization target of the cell 131. Consequently, the handover optimization technique mentioned in the present embodiment can further reduce the ping-pong handover rate from the threshold value P1 while suppressing the handover failure rate to substantially not more than the threshold value F1 when the handover failure rate of the cell 131 is comparatively low as, for example, in a cell having parameter sensitivity shown by the curved line L1 of Fig. 6. By the reducing the ping-pong handover rate, a handover processing load of the cell 131 is reduced, and wasteful resource consumption of a control interface (or a control line) of the base station 111 is suppressed.

Fourth embodiment

The present embodiment describes a still other specific example of changing the handover optimization target according to the measurement value of the HPI. A configuration example of the radio communication system 100 according to the present embodiment is the same as Fig. 1. In the present embodiment, an example of the region division shown in Fig. 4 will be explained. Namely, in Fig. 4, the region 3 of Fig. 10 is further divided into two regions (the regions 3 and 4 of Fig. 4).

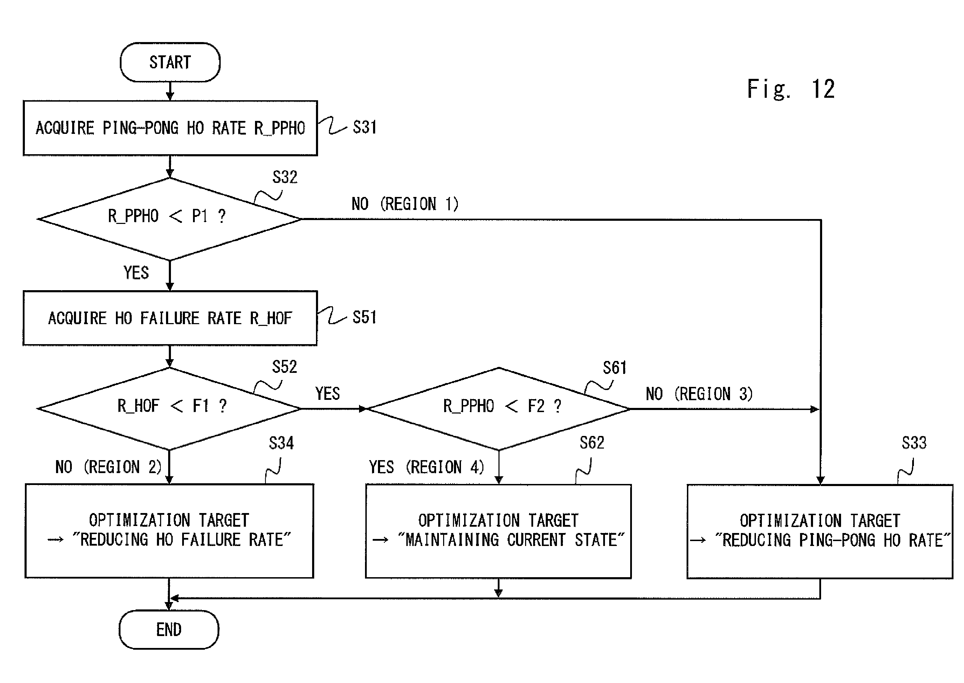

Fig. 12 is a flow chart showing an example of a procedure for determining an optimization target by the HO optimization control unit 121 according to the present embodiment. As is apparent from comparison of Figs. 12 and 11, Fig. 12 includes steps S61 and S62. Processing in steps S31 to S34, S51, and S52 shown in Fig. 12 may be the same as processing in steps of the same symbols shown in Fig. 11. In step S61 of Fig. 12, the HO optimization control unit 121 compares a measurement value (R_PPH) of a ping-pong handover rate with the threshold value P2. If the R_PPH is not less than the P2 (NO in step S61), i.e., if the R_PPH belongs to the region 3 of Fig. 4, the HO optimization control unit 121 determines "reducing the ping-pong handover rate" as the optimization target (step S33). In contrast with this, if the R_PPH is less than the P2 (YES in step S61), i.e., if the R_PPH belongs to the region 4 of Fig. 4, the HO optimization control unit 121 determines "maintaining a current value of an HO parameter" as the optimization target (step S62). In other words, in step S62, the HO optimization control unit 121 determines a halt of HO parameter adjustment.

A handover optimization technique mentioned in the present embodiment halts the HO parameter adjustment performed by the HO parameter adjustment unit 122, when a ping-pong handover rate and a handover failure rate of the cell 131 are sufficiently low (i.e., the region 4 of Fig. 4). Accordingly, according to the present embodiment, a load or resource consumption required for HO parameter adjustment can be suppressed.

Fifth embodiment

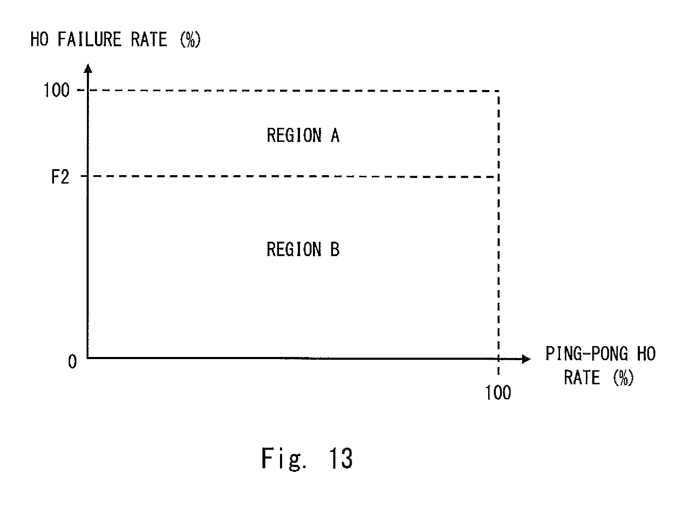

The present embodiment describes yet still other specific example of changing the handover optimization target according to the measurement value of the HPI. A configuration example of the radio communication system 100 according to the present embodiment is the same as Fig. 1. Fig. 13 is a graph for visualizing and illustrating an optimization target according to measurement values of a handover failure rate and a ping-pong handover rate. In an example of Fig. 13, a plane defined by a handover failure rate (0 to 100%) and a ping-pong handover rate (0 to 100%) is divided into two regions (regions A and B). A threshold value F2 shown in Fig. 13 is applied to a handover failure rate.

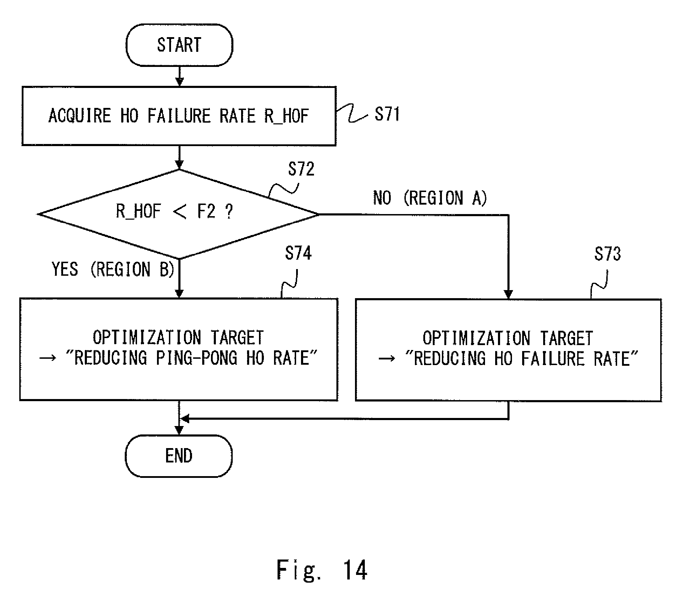

Fig. 14 is a flow chart showing an example of a procedure for determining an optimization target by the HO optimization control unit 121 according to the present embodiment. In step S71, the HO optimization control unit 121 acquires a measurement value of a handover failure rate regarding the cell 131. The measurement value of the handover failure rate may be calculated by the handover optimization system 120 using handover statistics received from the base station 111. Alternatively, the measurement value of the handover failure rate may be calculated by the base station 111, and may be included in the handover statistics. In step S72, the HO optimization control unit 121 compares a measurement value (R_HOF) of the handover failure rate with the threshold value F2. If the R_HOF is not less than the F2 (NO in step S72), i.e., if the R_HOF belongs to the region A of Fig. 13, the HO optimization control unit 121 determines "reducing the handover failure rate" as the optimization target (step S73). In contrast with this, if the R_HOF is less than the F2 (YES in step S72), i.e., if the R_HOF belongs to the region B of Fig. 14, the HO optimization control unit 121 determines "reducing the ping-pong handover rate" as the optimization target (step S74).

An HO parameter adjustment procedure by the HO parameter adjustment unit 122 of the present embodiment may be the same as the adjustment procedure of the second embodiment shown in Fig. 9.

A handover optimization technique mentioned in the present embodiment changes the optimization target of handover according to whether or not the handover failure rate exceeds the threshold value F2. In addition, an adjustment algorithm for an HO parameter is changed according to the change of the optimization target. Specifically, when the measurement value of the handover failure rate of the cell 131 exceeds the threshold value F2 (i.e. the region A of Fig. 14), the HO optimization control unit 121 determines "reducing the handover failure rate" as the optimization target of the cell 131. Meanwhile, when the measurement value of the handover failure rate of the cell 131 is less than the threshold value F2 (i.e. the region B of Fig. 14), the HO optimization control unit 121 determines "reducing the ping-pong handover rate" as the optimization target of the cell 131. Consequently, the HO parameter adjustment unit 122 can adjust the HO parameter so as to reduce a first performance indicator (e.g., the ping-pong handover rate or the number of ping-pong handovers) regarding a handover processing load while suppressing a second performance indicator (e.g., the handover failure rate or the number of handover failures) regarding the handover failure of the cell 131 to substantially not more than the threshold value F2. Accordingly, in the handover optimization technique mentioned in the present embodiment, the second performance indicator (e.g., the handover failure rate or the number of handover failures) regarding handover failure of the cell 131 can converge near the threshold value F2, regardless of the parameter sensitivity characteristic of the cell 131.

Other embodiments

The above-mentioned first to fifth embodiments can be combined as appropriate.

In the first to fifth embodiments, for simplification of explanation, the examples have been shown where the plane defined by the two HPIs (e.g., the handover failure rate and the ping-pong handover rate) is divided into a plurality of regions based on one or more conditions (i.e., one or more vertical lines or horizontal lines) using measurement values of only one of these two HPIs. However, in the region division, the plane may be divided into a plurality of regions based on a condition using measurement values of both of the two HPIs. For example, the HO optimization control unit 121 may change the optimization target according to whether or not a sum of the handover failure rate and the ping-pong handover rate exceeds a predetermined reference value (e.g., 90%).

For simplification of explanation, the first to fifth embodiments have described the specific examples of the region division (e.g., Fig. 4, 7, 10, or 13) according to the measurement values of the two HPIs (e.g., the handover failure rate and the ping-pong handover rate). In other words, in the first to fifth embodiments, the examples have been shown where the optimization target (or the HO parameter adjustment algorithm) is changed according to measurement values of at least one of the two HPIs. However, those skilled in the art should be able to understand that the first to fifth embodiments can be easily extended to handover optimization in consideration of measurement of three or more HPIs based on the explanation of the first to fifth embodiments. For example, a three-dimensional space defined by three HPIs may just be divided into a plurality of regions by one or more planes defined as a function of measurement values of at least one of these three HPIs.

The processes performed by the HO optimization control unit 121 and the HO parameter adjustment unit 122 that have been explained in the first to fifth embodiments may be implemented by using a semiconductor processing device including an ASIC (Application Specific Integrated Circuit). In addition, these processes may be implemented by causing a computer system including at least one processor (e.g. a microprocessor, an MPU, a DSP (Digital Signal Processor)) to execute a program. Specifically, one or more programs including instructions to cause a computer system to execute the algorithm regarding the HO optimization control unit 121 (or the HO parameter adjustment unit 122) explained with reference to the flow charts etc. may be created and supplied the program(s) to the computer.

The program(s) can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g., magneto-optical disks), CD-ROM (Read Only Memory), CD-R, CD-R/W, and semiconductor memories (such as mask ROM, PROM (Programmable ROM), EPROM (Erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line, such as electric wires and optical fibers, or a radio communication line.

Furthermore, the invention is not limited to the embodiments described above, and it will be obvious that various modifications may be made therein without departing from the spirit and scope of the present invention described above.

For example, the whole or part of the embodiments disclosed above can be described as, but not limited to, the following supplementary notes.

(Supplementary Note 1)

A handover parameter adjustment device including adjustment means for adjusting a handover parameter regarding outgoing handover of a mobile terminal from a first cell,
in which the adjustment means adjusts the handover parameter so as to reduce a second performance indicator regarding handover failure of the outgoing handover while suppressing a first performance indicator regarding a handover processing load of the first cell to not more than a first reference value.

(Supplementary Note 2)

The device according to Supplementary Note 1, in which the adjustment means changes an adjustment algorithm for adjusting the handover parameter depending on whether or not a measurement value of the first performance indicator exceeds the first reference value.

(Supplementary Note 3)

The device according to Supplementary Note 2, in which when the measurement value of the first performance indicator exceeds the first reference value, the adjustment means adjusts the handover parameter so as to reduce the first performance indicator.

(Supplementary Note 4)

The device according to Supplementary Note 3, in which when the measurement value of the first performance indicator is less than the first reference value, the adjustment means adjusts the handover parameter so as to reduce the second performance indicator.

(Supplementary Note 5)

The device according to any one of Supplementary Notes 2 to 4, in which the adjustment means changes the adjustment algorithm further depending on whether or not a measurement value of the second performance indicator exceeds a second reference value.

(Supplementary Note 6)

The device according to Supplementary Note 5, in which when the measurement value of the first performance indicator is less than the first reference value, and the measurement value of the second performance indicator is less than the second reference value, the adjustment means adjusts the handover parameter so as to reduce the first performance indicator.

(Supplementary Note 7)

The device according to Supplementary Note 6, in which the adjustment means changes the adjustment algorithm further depending on whether or not the measurement value of the first performance indicator exceeds a third reference value that is smaller than the first reference value.

(Supplementary Note 8)

The device according to Supplementary Note 7, in which when the measurement value of the first performance indicator is less than the third reference value, and the measurement value of the second performance indicator is less than the second reference value, the adjustment means maintains a current value of the handover parameter.

(Supplementary Note 9)

A handover parameter adjustment device including adjustment means for adjusting a handover parameter regarding outgoing handover of a mobile terminal from a first cell,
in which the adjustment means adjusts the handover parameter so as to reduce a first performance indicator regarding a handover processing load of the first cell while suppressing a second performance indicator regarding handover failure of the outgoing handover to not more than a first reference value.

(Supplementary Note 10)

The device according to Supplementary Note 9, in which the adjustment means changes an adjustment algorithm for adjusting the handover parameter depending on whether or not a measurement value of the second performance indicator exceeds the first reference value.

(Supplementary Note 11)

The device according to Supplementary Note 10, in which when the measurement value of the second performance indicator exceeds the first reference value, the adjustment means adjusts the handover parameter so as to reduce the first performance indicator.

(Supplementary Note 12)

The device according to Supplementary Note 11, in which when the measurement value of the second performance indicator is less than the first reference value, the adjustment means adjusts the handover parameter so as to reduce the first performance indicator.
This application is based upon and claims the benefit of priority from Japanese patent application No. 2012-147290, filed on June 29, 2012, the disclosure of which is incorporated herein in its entirety by reference.

**Reference Signs List**

| 100 | Radio Communication System |
| 101 | Mobile Terminal |
| 111 to 113 | Base Stations |
| 120 | Handover Optimization System |
| 121 | Handover (HO) Optimization Control Unit |
| 122 | Handover (HO) Parameter Adjustment Unit |
| 131 to 133 | Cells |

**Claims**

1. A handover optimization system comprising:

    adjustment means for adjusting a handover parameter applied to a first cell, in accordance with an optimization target defined using at least one of a plurality of performance indicators regarding outgoing handover of a mobile terminal from the first cell; and
    control means for changing the optimization target according to a measurement value of the at least one of the plurality of performance indicators.

2. The system according to Claim 1, wherein
    the plurality of handover performance indicators include a first performance indicator regarding a handover processing load of the first cell, and a second performance indicator regarding handover failure, and
    the control means changes the optimization target according to whether or not a measurement value of the first performance indicator exceeds a first reference value.

3. The system according to Claim 2, wherein when the measurement value of the first performance indicator exceeds the first reference value, the control means applies as the optimization target a first optimization target that indicates reducing the first performance indicator.

4. The system according to Claim 3, wherein when the measurement value of the first performance indicator is less than the first reference value, the control means applies as the optimization target a second optimization target that indicates reducing the second performance indicator.

5. The system according to any one of Claims 2 to 4, wherein the control means changes the optimization target according further to whether or not a measurement value of the second performance indicator exceeds a second reference value.

6. The system according to Claim 5 depending from Claim 3 or 4, wherein when the measurement value of the first performance indicator is less than the first reference value, and the measurement value of the second performance indicator is less than the second reference value, the control means applies the first optimization target as the optimization target.

7. The system according to Claim 6, wherein the control means changes the optimization target according further to whether or not the measurement value of the first performance indicator exceeds a third reference value that is smaller than the first reference value.

8. The system according to Claim 7, wherein when the measurement value of the first performance indicator is less than the third reference value, and the measurement value of the second performance indicator is less than the second reference value, the control means applies as the optimization target a third optimization target that indicates maintaining a current value of the handover parameter.

9. The system according to Claim 1, wherein
    the plurality of handover performance indicators include a first performance indicator regarding a handover processing load of the first cell, and a second performance indicator regarding handover failure, and
    the control means changes the optimization target according to whether or not a measurement value of the second performance indicator exceeds a second reference value.

10. The system according to any one of Claims 2 to 9, wherein the first performance indicator includes the number of ping-pong handovers or a ping-pong handover rate, and
    the second performance indicator includes the number of handover failures or a handover failure rate.

11. The system according to any one of Claims 1 to 10, wherein
    the optimization target includes an objective function, or the objective function and a constraint, and
    change of the optimization target is made by changing the objective function or the constraint.

12. The system according to any one of Claims 1 to 11, wherein the handover parameter includes at least one of a first offset that acts on radio quality of the first cell, a second offset that acts on radio quality of a neighboring cell located adjacent to the first cell, and a guard time for triggering transmission of a measurement report by the mobile terminal.

13. The system according to Claim 12 depending from Claim 3 or 4, wherein when the first optimization target is applied as the optimization target, the adjustment means executes at least one of increase of the first offset, decrease of the second offset, and increase of the guard time.

14. The system according to Claim 4, or Claim 12 depending from Claim 4, wherein
    the handover failure includes a plurality of handover failure types, and
    when the second optimization target is applied as the optimization target, the adjustment means adjusts the handover parameter in an adjustment direction where the second performance indicator is reduced based on the number of occurrences or an occurrence rate of each of the plurality of handover failure types.

15. The system according to Claim 14,
    wherein the adjustment means
    makes each of the plurality of handover failure types correspond to any of a plurality of adjustment directions of the handover parameter,
    calculates a total sum of the number of occurrences or the occurrence rates of the handover failure types made to correspond to each adjustment direction, as for each of the plurality of adjustment directions, and
    adjusts the handover parameter in the adjustment direction where a total sum of the occurrence rates is the highest.

16. The system according to Claim 14 or 15, wherein the plurality of handover failure types includes Too Late Handover, Too Early Handover, and Handover to Wrong Cell.

17. The system according to any one of Claims 1 to 16, wherein
    the adjustment means adjusts the handover parameter using an adjustment algorithm associated with the optimization target, and
    the adjustment algorithm is changed according to the change of the optimization target.

18. A handover optimization control device comprising:

    control means for changing an optimization target applied to handover optimization processing of a first cell, according to a measurement value of at least one of a plurality of performance indicators regarding outgoing handover of a mobile terminal from the first cell.

19. The device according to Claim 18, wherein an adjustment algorithm for adjusting a handover parameter is changed according to the change of the optimization target.

20. The device according to Claim 18 or 19, wherein
    the plurality of handover performance indicators include a first performance indicator regarding a handover processing load of the first cell, and a second performance indicator regarding handover failure, and
    the control means changes the optimization target according to whether or not a measurement value of the first performance indicator exceeds a first reference value.

21. The device according to Claim 20, wherein when the measurement value of the first performance indicator exceeds the first reference value, the control means applies as the optimization target a first optimization target that indicates reducing the first performance indicator.

22. The device according to Claim 21, wherein when the measurement value of the first performance indicator is less than the first reference value, the control means applies as the optimization target a second optimization target that indicates reducing the second performance indicator.

23. The device according to any one of Claims 20 to 22, wherein the control means changes the optimization target according further to whether or not a measurement value of the second performance indicator exceeds a second reference value.

24. The device according to Claim 23 depending from Claim 21 or 22, wherein when the measurement value of the first performance indicator is less than the first reference value, and the measurement value of the second performance indicator is less than the second reference value, the control means applies the first optimization target as the optimization target.

**25.** The device according to Claim 24, wherein the control means changes the optimization target according further to whether or not the measurement value of the first performance indicator exceeds a third reference value that is smaller than the first reference value.

**26.** The device according to Claim 25, wherein when the measurement value of the first performance indicator is less than the third reference value, and the measurement value of the second performance indicator is less than the second reference value, the control means applies as the optimization target a third optimization target that indicates maintaining a current value of a handover parameter.

**27.** The device according to Claim 18 or 19, wherein
the plurality of handover performance indicators include a first performance indicator regarding a handover processing load of the first cell, and a second performance indicator regarding handover failure, and
the control means changes the optimization target according to whether or not a measurement value of the second performance indicator exceeds a second reference value.

**28.** The device according to any one of Claims 20 to 27, wherein
the first performance indicator includes the number of ping-pong handovers or a ping-pong handover rate, and
the second performance indicator includes the number of handover failures or a handover failure rate.

**29.** The device according to any one of Claims 18 to 28, wherein
the optimization target includes an objective function, or the objective function and a constraint, and
change of the optimization target is made by changing the objective function or the constraint.

**30.** A handover parameter adjustment device comprising:

adjustment means for adjusting a handover parameter applied to a first cell, in accordance with an adjustment algorithm that is changed according to a measurement value of at least one of a plurality of performance indicators regarding outgoing handover of a mobile terminal from the first cell.

**31.** The device according to Claim 30, wherein
the plurality of handover performance indicators include a first performance indicator regarding a handover processing load of the first cell, and a second performance indicator regarding handover failure, and
the adjustment means uses a different adjustment algorithm depending on whether or not a measurement value of the first performance indicator exceeds a first reference value.

**32.** The device according to Claim 31, wherein when the measurement value of the first performance indicator exceeds the first reference value, the adjustment means uses a first adjustment algorithm associated with a first optimization target that indicates reducing the first performance indicator.

**33.** The device according to Claim 32, wherein when the measurement value of the first performance indicator is less than the first reference value, the adjustment means uses a second adjustment algorithm associated with a second optimization target that indicates reducing the second performance indicator.

**34.** The device according to any one of Claims 31 to 33, wherein the adjustment means uses a different adjustment algorithm further depending on whether or not a measurement value of the second performance indicator exceeds a second reference value.

**35.** The device according to Claim 34 depending from Claim 32 or 33, wherein when the measurement value of the first performance indicator is less than the first reference value, and the measurement value of the second performance indicator is less than the second reference value, the adjustment means uses the first adjustment algorithm associated with the first optimization target.

**36.** The device according to Claim 35, wherein the adjustment means uses a different adjustment algorithm further depending on whether or not the measurement value of the first performance indicator exceeds a third reference value that is smaller than the first reference value.

37. The device according to Claim 36, wherein when the measurement value of the first performance indicator is less than the third reference value, and the measurement value of the second performance indicator is less than the second reference value, the adjustment means uses a third adjustment algorithm associated with a third optimization target that indicates maintaining a current value of the handover parameter.

38. The device according to Claim 30, wherein
the plurality of handover performance indicators include a first performance indicator regarding a handover processing load of the first cell, and a second performance indicator regarding handover failure, and
the adjustment means uses a different adjustment algorithm depending on whether or not a measurement value of the second performance indicator exceeds a second reference value.

39. The device according to any one of Claims 31 to 38, wherein
the first performance indicator includes the number of ping-pong handovers or a ping-pong handover rate, and
the second performance indicator includes the number of handover failures or a handover failure rate.

40. The device according to any one of Claims 30 to 39, wherein the handover parameter includes at least one of a first offset that acts on radio quality of the first cell, a second offset that acts on radio quality of a neighboring cell located adjacent to the first cell, and a guard time for triggering transmission of a measurement report by the mobile terminal.

41. The device according to Claim 40 depending from Claim 32 or 33, wherein the first adjustment algorithm includes executing at least one of increase of the first offset, decrease of the second offset, and increase of the guard time.

42. The device according to Claim 33, or Claim 40 depending from Claim 33, wherein
the handover failure includes a plurality of handover failure types, and
the second adjustment algorithm includes adjusting the handover parameter in an adjustment direction where the second performance indicator is reduced based on the number of occurrences or an occurrence rate of each of the plurality of handover failure types.

43. The device according to Claim 42, wherein the plurality of handover failure types includes Too Late Handover, Too Early Handover, and Handover to Wrong Cell.

44. A base station comprising the handover parameter adjustment device according to any one of Claims 30 to 43.

45. A method for controlling handover optimization, the method comprising:

changing an optimization target applied to handover optimization processing of a first cell, according to a measurement value of at least one of a plurality of performance indicators regarding outgoing handover of a mobile terminal from the first cell.

46. A handover parameter adjustment method comprising:

adjusting a handover parameter applied to a first cell, in accordance with an adjustment algorithm that is changed according to a measurement value of at least one of a plurality of performance indicators regarding outgoing handover of a mobile terminal from the first cell.

47. A non-transitory computer readable medium storing a program for causing a computer to perform a method for handover optimization control,
wherein the method includes changing an optimization target applied to handover optimization processing of a first cell, according to a measurement value of at least one of a plurality of performance indicators regarding outgoing handover of a mobile terminal from the first cell.

48. A non-transitory computer readable medium storing a program for causing a computer to perform a method for handover parameter adjustment,
wherein the method includes adjusting a handover parameter applied to a first cell, in accordance with an adjustment algorithm that is changed according to a measurement value of at least one of a plurality of performance indicators regarding outgoing handover of a mobile terminal from the first cell.

Fig. 1

START

ACQUIRE MEASUREMENT VALUE OF HANDOVER PERFORMANCE INDICATOR (E.G. HO FAILURE RATE, PING-PONG HO RATE) — S11

DETERMINE OPTIMIZATION TARGET ACCORDING TO MEASUREMENT VALUE OF HANDOVER PERFORMANCE INDICATOR — S12

APPLY OPTIMIZATION TARGET (OR HO PARAMETER ADJUSTMENT ALGORITHM BEING ASSOCIATED WITH OPTIMIZATION TARGET) TO HO PARAMETER ADJUSTMENT UNIT — S13

END

Fig. 2

Fig. 3

```
           ┌─────────┐
           │  START  │
           └─────────┘
                │
                ▼
  ┌──────────────────────────────────────────────┐
  │  UPDATE HO PARAMETER USING ADJUSTMENT ALGORITHM │  ⌇ S21
  │  DETERMINED ACCORDING TO MEASUREMENT VALUE OF   │
  │  HANDOVER PERFORMANCE INDICATOR                 │
  └──────────────────────────────────────────────┘
                │
                ▼
  ┌──────────────────────────────────────────────┐
  │     APPLY UPDATED HO PARAMETER TO CELL         │  ⌇ S22
  └──────────────────────────────────────────────┘
                │
                ▼
           ┌─────────┐
           │   END   │
           └─────────┘
```

Fig. 4

HO FAILURE RATE (%)

```
100 ┤- - - - - - - - - - - - - - - - - - -
    │                          ¦            ¦
    │                          ¦            ¦
    │          REGION 2        ¦            ¦
    │                          ¦            ¦
    │                          ¦  REGION 1  ¦
    │                          ¦            ¦
 F1 ┤- - - - - - - - - - - - - ¦            ¦
    │      ┌- - - - - - - - - -¦            ¦
    │REGION 4¦   REGION 3       ¦            ¦
  0 └──────┴──────────────────┴────────────┴──────▶  PING-PONG HO
          P2                  P1           100         RATE (%)
```

| | |
|---|---|
| REGION 1 | REDUCING PING-PONG HO RATE |
| REGION 2 | REDUCING HO FAILURE RATE |
| REGION 3 | REDUCING PING-PONG HO RATE |
| REGION 4 | MAINTAINING CURRENT HO PARAMETER |

Fig. 5

HO FAILURE RATE (%)

REGION 2    REGION 1

L2

L1

CP2

CP1

F1

REGION 4 REGION 3

0

P2    P1    100

PING-PONG HO
RATE (%)

Fig. 6

HO FAILURE RATE (%)

100 ┄┄┄┄┄┄┄┄┄┄┄┄┄┄┄┄┄┄┄┄┄

REGION 2

REGION 1

0

P1

100

PING-PONG HO
RATE (%)

Fig. 7

START

ACQUIRE PING-PONG HO RATE R_PPHO — S31

S32

R_PPHO < P1 ?

NO (REGION 1)

YES (REGION 2)

S34

OPTIMIZATION TARGET
→"REDUCING HO FAILURE RATE"

S33

OPTIMIZATION TARGET
→"REDUCING PING-PONG HO RATE"

END

Fig. 8

Fig. 9

START

OPTIMIZATION TARGET ? — S41

REDUCING PING-PONG HO RATE

REDUCING HO FAILURE RATE

ACQUIRE THE NUMBER OF TOO LATE HO (N_TL),
THE NUMBER OF TOO EARLY HO (N_TE),
THE NUMBER OF HO TO WRONG CELL-F (N_WCF),
AND THE NUMBER OF HO TO WRONG CELL-R (N_WCR) — S42

N_TE + N_WCF
< N_TL + N_WCR ? — S43

NO

YES

ADJUST HO PARAMETER IN
REDUCTION DIRECTION OF
N_TL+N_WCR
(E.G. INCREASE CIO) — S44

ADJUST HO PARAMETER IN
REDUCTION DIRECTION OF
N_TE+N_WCF
(E.G. DECREASE CIO) — S45

ADJUST HO PARAMETER IN
REDUCTION DIRECTION OF
PING-PONG HO RATE
(E.G. DECREASE CIO) — S46

END

Fig. 10

START

ACQUIRE PING-PONG HO RATE R_PPHO — S31

S32

$R\_PPHO < P1$ ?    NO (REGION 1)

YES

ACQUIRE HO FAILURE RATE R_HOF — S51

S52

$R\_HOF < F1$ ?    YES (REGION 3)

NO (REGION 2)    S34

S33

OPTIMIZATION TARGET
→"REDUCING HO FAILURE RATE"

OPTIMIZATION TARGET
→"REDUCING PING-PONG HO RATE"

END

Fig. 11

Fig. 12

START

ACQUIRE PING-PONG HO RATE R_PPHO — S31

S32
$R\_PPHO < P1$ ?  — NO (REGION 1)

YES

ACQUIRE HO FAILURE RATE R_HOF — S51

S52
$R\_HOF < F1$ ?  — YES

S61
$R\_PPHO < F2$ ?  — NO (REGION 3)

NO (REGION 2)
S34
OPTIMIZATION TARGET
→ "REDUCING HO FAILURE RATE"

YES (REGION 4)
S62
OPTIMIZATION TARGET
→ "MAINTAINING CURRENT STATE"

S33
OPTIMIZATION TARGET
→ "REDUCING PING-PONG HO RATE"

END

EP 2 869 634 A1

HO FAILURE RATE (%)

Fig. 13

START

ACQUIRE HO FAILURE RATE R_HOF — S71

S72

R_HOF < F2 ? ——— NO (REGION A)

YES (REGION B)

S74

OPTIMIZATION TARGET
→ "REDUCING PING-PONG HO RATE"

S73

OPTIMIZATION TARGET
→ "REDUCING HO FAILURE RATE"

END

Fig. 14

Fig. 15

Fig. 16A

Fig. 16B

# EP 2 869 634 A1

**INTERNATIONAL SEARCH REPORT**

| International application No. |
| --- |
| PCT/JP2013/000230 |

| A. CLASSIFICATION OF SUBJECT MATTER |
| --- |
| *H04W36/08*(2009.01)i, *H04W24/02*(2009.01)i |

According to International Patent Classification (IPC) or to both national classification and IPC

## B. FIELDS SEARCHED

Minimum documentation searched (classification system followed by classification symbols)
H04W36/08, H04W24/02

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
| --- | --- | --- |
| X | WO 2011/058818 A1 (NEC Corp.), | 1,18,19,30, 45–48 |
| | 19 May 2011 (19.05.2011), | |
| Y | paragraphs [0067], [0089] to [0103]; fig. 10 | 2–17,20–29, 31–44 |
| | & US 2012/0252440 A1 & EP 2501172 A1 | |
| | & CN 102668620 A | |
| | | |
| Y | 3GPP TR 36.902, V1.2.0, 2009.05 | 2–17,20–29, 31–44 |

| ☐ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 26 February, 2013 (26.02.13) | 05 March, 2013 (05.03.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

31

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2012147290 A

**Non-patent literature cited in the description**

• *3GPP TS 36.331,* June 2010

• Weighted performance based handover parameter optimization in LTE. **THOMAS JANSEN et al.** IEEE VTC2011. spring, IWSON, 15 May 2011